# FASCICULE DE BREVET EUROPEEN

(11) **EP 2 457 059 B1**
(45) Date de publication et mention de la délivrance du brevet: **04.01.2017**
(21) Numéro de dépôt: 10742209.9
(22) Date de dépôt: 07.07.2010
(51) Int. Cl.: G01C 1/02, G01S 13/89

(54) **PROCÉDÉ DE SURVEILLANCE DES MOUVEMENTS D'UN TERRAIN**
VERFAHREN ZUR ÜBERWACHUNG VON BODENBEWEGUNGEN
METHOD FOR MONITORING MOVEMENTS OF GROUND

(30) Priorité: 20.07.2009 FR 0955037
(43) Date de publication de la demande: 30.05.2012
(73) Titulaire: Soletanche Freyssinet, 92500 Rueil Malmaison (FR)
(72) Inventeur: GASTINE, Eric, F-92500 Rueil Malmaison (FR); BETH, Martin, F-92500 Rueil Malmaison (FR); RANVIER, Fabien, F-92500 Rueil Malmaison (FR)
(74) Mandataire: Henrich, Christel
(86) Numéro de dépôt international: PCT/FR2010/051425
(87) Numéro de publication internationale: WO 2011/010042

(56) Documents cités:
- WO-A1-98/02761
- GB-A- 2 308 033
- JP-A- H09 189 762

## Description

### Arrière plan de l'invention

La présente invention a trait au domaine de la surveillance des mouvements de terrain, tels que par exemple un glissement de terrain, un affaissement, une déformation verticale du terrain, ou tout autre type de mouvement de terrain.

La surveillance des mouvements de terrain est en particulier nécessaire pour prévenir l'endommagement d'un bâtiment ou un ouvrage d'art construit sur un terrain sur lequel ont lieu des travaux.

Un tel mouvement de terrain peut également être dû à des travaux réalisés dans le sol de ce terrain.

Par exemple, un terrain pourra avoir tendance à s'affaisser lors de la réalisation d'un ouvrage souterrain comme par exemple un tunnel ou des fondations.

Traditionnellement, la surveillance des mouvements de terrain est réalisée en utilisant un ou plusieurs théodolites qui visent des cibles de surveillance disposées sur le terrain ou sur l'ouvrage que l'on souhaite surveiller.

Plus récemment, on a cherché à utiliser les images satellites pour surveiller le déplacement de points de surveillance disposés sur le terrain, comme dans le document JP-H09189762.

Pour ce faire, on réalise une étude interférométrique à partir d'une pluralité d'images radar du terrain et d'un modèle numérique de terrain (MNT) du terrain que l'on souhaite surveiller, étant précisé que ces données sont facilement disponibles dans le commerce.

Au cours de cette étude, on sélectionne une pluralité de points de surveillance situés sur ce terrain. Il existe aujourd'hui plusieurs algorithmes permettant de sélectionner des points de surveillance qui ont la particularité d'être bien visibles sur les images radar.

Les points de surveillance sont donc choisis de manière à renvoyer vers le satellite un écho d'intensité suffisante pour être vus à chaque passage du satellite.

Des interférogrammes ponctuels sont alors calculés.

Le résultat de l'étude interférométrique permet donc d'obtenir pour la zone d'étude, la liste des points de surveillance, leurs coordonnées brutes ainsi que la variation brute de leurs coordonnées.

Cependant, il est connu que ces résultats sont généralement bruités et de qualité variable. Autrement dit, les coordonnées brutes et les variations brutes de coordonnées obtenues par cette méthode se révèlent être peu précises et donc difficilement exploitables en l'état.

### Objet et résumé de l'invention

Un objet de la présente invention est de fournir un procédé de surveillance des mouvements de terrain offrant une meilleure précision.

L'invention atteint son but par le fait que le procédé de surveillance comporte :
- une étape lors de laquelle on fournit les variations brutes des coordonnées d'une pluralité de points de surveillance et d'au moins un point de référence situés sur le terrain ;
- une étape de détermination des variations réelles des coordonnées dudit au moins un point de référence ; et
- une étape de calcul des variations corrigées des coordonnées des points de surveillance à partir des variations brutes des coordonnées des points de surveillance, des variations brutes des coordonnées dudit point de référence et des variations réelles des coordonnées dudit point de référence.

Selon l'invention, un point de référence est un point dont on connaît parfaitement les variations de coordonnées. Ces variations parfaitement connues sont donc appelées variations « réelles », contrairement aux variations « brutes » qui sont des variations de coordonnées dont on sait qu'elles sont imprécises.

Des variations « brutes » correspondent notamment mais pas exclusivement à des variations obtenues à l'issue d'une étude interférométrique telle que celle décrite ci-dessus.

Une variation « réelle » peut quant à elle être déterminée par topographie à l'aide d'un ou plusieurs théodolites. De préférence, on utilise plusieurs points de référence.

On précise par ailleurs que la présente invention est strictement indépendante de l'algorithme utilisé pour obtenir les variations brutes de coordonnées.

On ajoute que les variations brutes peuvent provenir de données autres que satellitaires.

De préférence, les variations brutes de coordonnées sont fournies périodiquement à plusieurs instants, l'ensemble de ces instants constituant la durée de l'étude. Les variations réelles des coordonnées des points de référence sont déterminées à chacun de ces instants.

Avantageusement, le procédé selon l'invention comporte en outre une étape lors de laquelle on détermine la variation temporelle d'au moins l'une des coordonnées corrigées d'au moins l'un des points de surveillance.

Selon un mode de réalisation préféré, la variation temporelle corrigée d'au moins l'une des coordonnées d'au moins l'un des points de surveillance est la variation corrigée de l'altitude de ce point de surveillance.

On comprend donc que la présente invention permet de représenter la variation d'altitude de la pluralité de points de surveillance. Plus précisément, on visualise les points de surveillance en utilisant le taux de déplacement moyen de chaque point de surveillance pendant la période d'étude.

Avantageusement, le procédé de surveillance selon l'invention comporte en outre une étape de représentation de ladite variation temporelle. Au sens de l'invention, cette représentation peut être faite sous forme de tableau de données, de graphiques, d'animations, de lignes de niveaux ou sous toute autre forme de représentation permettant à un opérateur de prendre connaissance de la variation temporelle corrigée de cette coordonnée.

Avantageusement, au cours de l'étape de représentation, la position de chacun des points de surveillance, ainsi que la variation corrigée de l'altitude de chacun des points de surveillance, sont représentées sur une carte géographique ou satellite d'un système d'information géographique.

La variation corrigée de l'altitude pourra par exemple être schématisée par une gamme de couleurs et/ou par un graphique illustrant la variation de l'altitude des points de surveillance au cours du temps.

Préférentiellement, l'étape de calcul des variations corrigées des coordonnées des points de surveillance est réalisée à l'aide des variations des coordonnées brutes et réelles des points de référence entre deux instants successifs.

Plus précisément, l'étape de calcul des variations corrigées des coordonnées des points de surveillance met de préférence en oeuvre un algorithme de distribution des erreurs de type moindres carrés. On y intègre alors les données relatives aux points de référence.

Le calcul consiste en la création d'une surface à partir des variations d'altitude des points de surveillance. On optimise ensuite cette surface en la déformant pour qu'elle ajuste au mieux les variations réelles de coordonnées des points de référence.

Selon un mode de mise en oeuvre avantageux, le procédé selon l'invention comporte en outre :
- une étape lors de laquelle on fournit les coordonnées brutes desdits points de surveillance et les coordonnées brutes dudit au moins un point de référence ;
- une étape de détermination des coordonnées réelles dudit point de référence ;
- une étape de calcul des coordonnées corrigées desdits points de surveillance, réalisée à partir des coordonnées brutes des points de surveillance, des coordonnées brutes dudit point de référence et des coordonnées réelles dudit point de référence.

Autrement dit, le ou les points de référence sont également utilisés pour corriger les coordonnées de points de surveillance. Connaissant les coordonnées réelles de ces points de référence et leurs coordonnées brutes estimées notamment par des méthodes interférométriques, on applique une correction, par exemple une translation, (permettant de passer des coordonnées brutes aux coordonnées réelles des points de référence) à tous les points de surveillance, à la suite de quoi on obtient les coordonnées corrigées desdits points de surveillance.

De préférence, la correction des coordonnées des points de surveillance n'est effectuée qu'une fois en tout début de l'étude, en particulier lorsque le procédé est utilisé pour surveiller la variation de l'altitude des points de surveillance. Cette correction est essentiellement réalisée pour connaître avec précision la position des points de surveillance, la variation de l'altitude étant donnée par les variations corrigées des coordonnées.

Préférentiellement, les variations brutes des coordonnées et/ou les coordonnées brutes sont fournies à partir d'une étude interférométrique basée sur un modèle numérique de terrain et plusieurs images radar prises par au moins un dispositif de prises d'images radar, de préférence un satellite.

Selon un aspect avantageux de l'invention, au moins l'un des points de surveillance du terrain comprend au moins un réflecteur d'ondes électromagnétiques destiné à être dirigé vers ledit au moins un satellite. Ce réflecteur permet si nécessaire d'améliorer la visibilité du point de surveillance.

Selon un autre aspect avantageux de l'invention, au moins l'un des points de référence du terrain comprend au moins un réflecteur d'ondes électromagnétiques destiné à être dirigé vers ledit dispositif de prise d'images radar. Ici aussi, le réflecteur permet d'améliorer la visibilité du ou des points de référence, ou même de rendre visible un point de référence dont on connaît parfaitement les coordonnées parce que l'on sait, par exemple, qu'il est situé sur une zone stable. En effet, il peut se trouver que certains points de référence particulièrement avantageux ne sont cependant pas naturellement visibles par le dispositif de prises d'images radar. On comprend donc que l'invention permet de profiter des « qualités » de ces points de référence en les rendant visibles (ou en améliorant leur visibilité) sur les images radar.

De préférence, les réflecteurs sont orientables de manière à être dirigés vers des satellites évoluant à des orbites différentes.

Pour ce qui concerne la détermination de la position réelle des points de référence, on précise que les coordonnées réelles des points de référence sont préférentiellement déterminées par mesures GPS et/ou par topographie. On pourra notamment utiliser des théodolites pour réaliser les mesures topographiques. Les variations de coordonnées réelles sont également déterminées de manière préférentielle par topographie.

La présente invention porte également sur un programme d'ordinateur comportant des instructions pour l'exécution des étapes du procédé de surveillance selon l'invention lorsque ledit programme est exécuté par un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention porte en outre sur un support d'enregistrement lisible par un ordinateur sur lequel est enregistré le programme d'ordinateur selon l'invention.

Ce support est par exemple un disque dur, un CD rom, une disquette, ou tout autre type de support de données, pouvant être situé dans un ordinateur local ou sur un serveur distant.

L'invention concerne enfin l'utilisation du procédé selon l'invention, pour la surveillance de déformations non-linéaires du terrain, susceptibles de se produire notamment lors de la réalisation d'un ouvrage souterrain, comme par exemple un tunnel. L'invention permet également la surveillance de déformations linéaires.

### Brève description des dessins

L'invention sera mieux comprise à la lecture de la description faite ci-après, à titre indicatif mais non limitatif, en référence aux dessins annexés, sur lesquels :
- la figure **1** est un diagramme schématisant les étapes du procédé de surveillance objet de l'invention ;
- la figure **2** est une vue en perspective d'un réflecteur d'ondes radar destiné à être positionné en un point de référence.
- la figure **3** montre une surface brute obtenue à partir des variations brutes des coordonnées des points de surveillance, ainsi que les variations réelles des points de référence ;
- la figure **4** montre une surface corrigée obtenue à partir de la déformation de la surface brute de la figure 3 ;
- la figure **5** illustre la représentation des deux points de surveillance après correction ainsi que les variations corrigées de l'altitude de l'un d'entre eux ;
- la figure **6** illustre la représentation de deux points de surveillance dont les coordonnées brutes ne sont pas corrigées ; et
- la figure **7** représente un ordinateur comprenant un disque dur sur lequel est enregistré le programme d'ordinateur mettant en oeuvre le procédé selon l'invention.

### Description détaillée d'un mode de réalisation

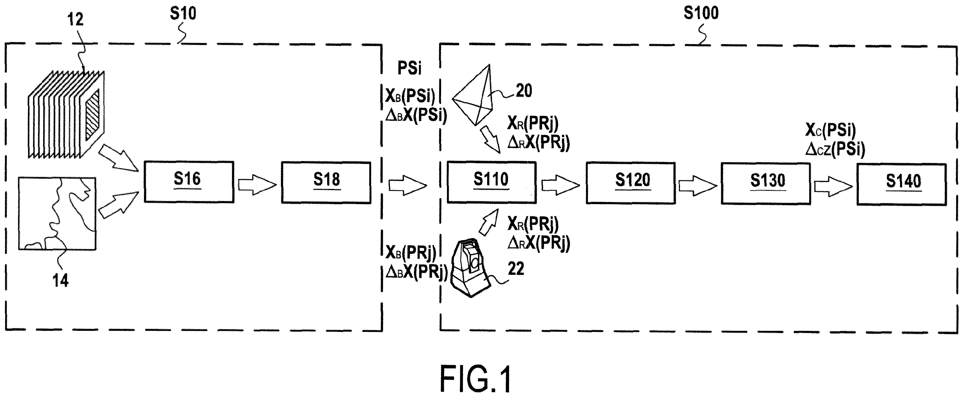

A l'aide de la figure **1****,** on va décrire les étapes d'un mode de mise en oeuvre du procédé de surveillance selon l'invention.

Le procédé selon l'invention utilise les variations brutes, au cours du temps, des coordonnées d'une pluralité de points de surveillance (PSI).

Comme mentionné ci-dessus, le procédé selon l'invention est indépendant du moyen ou algorithme utilisé pour obtenir ces variations brutes, étant précisé que de tels moyen ou algorithme sont déjà connus par ailleurs.

Dans ce mode de mise en oeuvre, on utilisera une étude ou processus interférométrique pour obtenir lesdites variations brutes, un tel processus étant connu par ailleurs.

Avant de détailler le processus interférométrique, on précise qu'au sens de l'invention, un point de surveillance est une zone au sol qui réfléchit très bien les ondes radar, et dont les caractéristiques réflectives sont de préférence constantes dans le temps. Cela signifie que l'on sera sûr de pouvoir détecter et surveiller les déplacements de ce point de surveillance dans le temps. Un point de surveillance est par exemple constitué par un bâtiment, un toit de maison, un parapet de pont, un pipeline ou toute autre structure réfléchissante.

Le processus interférométrique correspond au bloc **S10** de la figure **1****.** Au cours de ce processus, on utilise une pluralité d'images radar **12** du terrain que l'on souhaite surveiller, étant précisé que ces images sont prises par au moins un satellite **S** à différents instants. Classiquement, chaque image radar possède une amplitude et une phase. L'interférométrie est précisément basée sur la différence de phase entre deux images radar prises entre deux instants successifs.

Ce processus nécessite en outre une modèle numérique de terrain **14** (MNT) qui permet d'éliminer les contributions de la topographie dans le signal de phase, et de créer des matrices de passage entre la géométrie radar et la géométrie géographique.

Ce modèle numérique de terrain **14** couvre la zone d'étude, c'est-à-dire le terrain que l'on souhaite surveiller.

Un tel modèle numérique de terrain **14** est généralement disponible en libre accès sur Internet. On pourra par exemple choisir le modèle SRTM.

Au cours de l'étape **S16,** on détermine une liste de points de surveillance ainsi que leurs coordonnées brutes. L'utilisation de données ENVISAT permet d'obtenir des coordonnées brutes ayant une précision comprise entre 5 et 10 mètres.

Toujours au cours de cette étape, on calcule les matrices de passage des coordonnées brutes des images radar en coordonnées géographiques brutes.

Ce sont préférentiellement les coordonnées géographiques qui sont utilisées dans la mise en oeuvre du procédé selon l'invention.

Ensuite, on calcule des interférogrammes bruts qui subissent postérieurement une étape de décomposition des composantes du signal **S18.** Cette étape de débruitage consiste à éliminer les contributions autres que celles liées au mouvement du sol, ces contributions parasites pouvant être liées à des problèmes orbitaux topographiques ou à la variabilité de composantes atmosphériques.

Ainsi le processus interférométrique permet-il d'obtenir, pour la zone d'étude, la liste des points de surveillance PSᵢ, leurs coordonnées brutes
X_{B}(PSᵢ) - où X = (x,y,z) - ainsi que leurs variations brutes de coordonnées Δ_{B}X(PSᵢ).

On va maintenant décrire plus en détail les étapes du procédé de surveillance selon l'invention, ces étapes étant regroupées dans le bloc **S100** de la figure 1 et se basant sur les données brutes fournies au cours du processus interférométrique **S10.**

Dans cet exemple, la variation brute de coordonnées qui nous intéresse est la variation brute Δ_{B}z(PSᵢ) de l'altitude z de chacun des points de surveillance, cette altitude z étant préférentiellement considérée selon une direction verticale. Conformément à l'invention, on sélectionne également au moins un point de référence PRⱼ (de préférence plusieurs) situé sur le terrain, c'est-à-dire la zone d'étude.

Un point de référence PRⱼ est par exemple un point situé sur le sol dont on connaît parfaitement, ou du moins dont on peut connaître parfaitement, les variations de coordonnées au cours du temps. Le plus souvent, mais pas exclusivement, ce point de référence PRⱼ est disposé sur une zone du terrain qui est stable, ou du moins dont les déplacements sont très faibles au cours du temps, ou encore dont les déplacements éventuels sont facilement mesurables. Dans ce mode de mise en oeuvre, on utilise une pluralité de points de référence PRⱼ afin d'améliorer la précision des mesures.

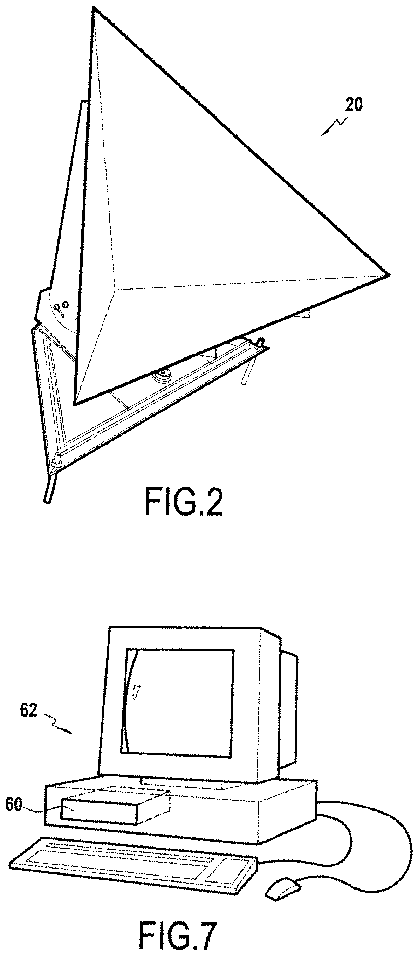

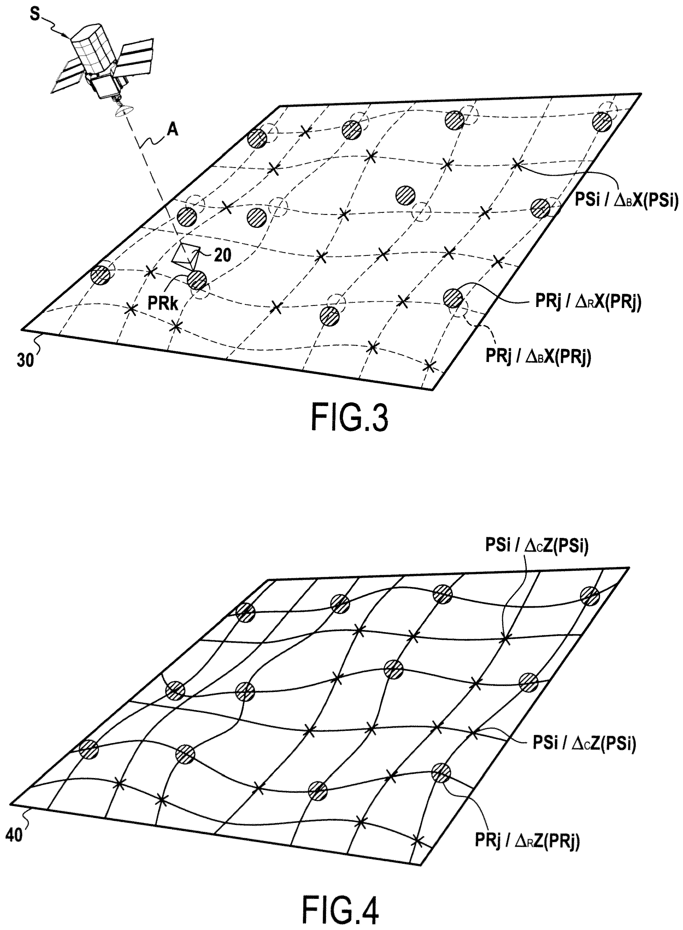

Selon un aspect avantageux de l'invention, certains des points de référence PRₖ sont équipés d'un réflecteur d'ondes radar **20,** visible sur la figure **2****,** si leurs réflectivités naturelle d'ondes électromagnétiques n'est pas suffisante pour que ces points apparaissent clairement sur les images radar **12** prises par le satellite **S.** Chaque réflecteur **20** est aligné avec l'axe de visée **A** du satellite **S**, comme cela est schématisé sur la figure **3****.**

Ce réflecteur **20** présente la particularité d'être orientable afin de pouvoir être aligné avec les axes de visée de satellites évoluant sur des orbites différentes. Il présente la forme d'un trièdre dont on peut régler l'inclinaison et l'azimut. Dans cet exemple, le satellite utilisé est ENVISAT dont l'axe de visée fait un angle de 23° avec la verticale.

On comprend donc que le processus interférométrique décrit ci-dessus fournit en outre les coordonnées brutes X_{B}(PRⱼ) - où X = (x,y,z) - et les variations brutes Δ_{B}X(PRⱼ) des coordonnées des points de référence PRⱼ.

Conformément à l'invention, au cours de l'étape **S110** on détermine les variations réelles Δ_{R}X(PRⱼ) des coordonnées des points de référence, ainsi que les coordonnées réelles X_{R}(PRⱼ) des points de référence.

Dans cet exemple, les variations réelles des coordonnées des points de référence et leurs coordonnées réelles sont déterminées par des mesures topographiques ou à l'aide d'un GPS. De préférence, ces mesures sont réalisées périodiquement, par exemple chaque jour où une image radar **12** est prise. Par ailleurs, les mesures topographiques pourront être effectuées à l'aide d'un ou plusieurs théodolites **22** visant des cibles disposées aux points de référence PRⱼ.

Ces mesures permettent de calculer des vecteurs représentant les variations réelles des coordonnées des points de référence.

Pour ceux des points de référence PRₖ dont on connaît précisément les coordonnées réelles X_{R}(PRₖ) ainsi que les variations réelles Δ_{R}X(PRₖ) de coordonnées pendant la durée de l'étude, il n'est pas nécessaire d'effectuer les mesures périodiques précitées. De tels points de référence PRₖ seront le plus souvent des points de référence équipés de réflecteurs **20** situés dans des zones sans mouvement de sol.

On réalise ensuite une étape **S120** de calcul des coordonnées corrigées Δ_{c}X(PSᵢ) desdits points de surveillance, réalisée à partir des coordonnées brutes Δ_{B}X(PSᵢ) des points de surveillance, des coordonnées brutes X_{B}(PRⱼ) des points de référence et des coordonnées réelles X_{R}(PRⱼ) des points de référence.

Pour ce faire, les points de référence sont utilisés pour corriger les coordonnées brutes des points de surveillance. On connaît les coordonnées réelles de ces points de référence et leurs coordonnées brutes estimées à l'issue du processus interférométrique **S010.** On calcule alors une correction, par exemple une translation entre les coordonnées brutes X_{B}(PRⱼ) et les coordonnées réelles X_{R}(PRⱼ) des points de références, que l'on applique ensuite aux coordonnées brutes X_{B}(PSᵢ) de tous les points de surveillance, grâce à quoi on obtient les coordonnées corrigées X_{C}(PSᵢ) des points de surveillance, ce qui permet d'améliorer sensiblement la précision de leurs positions.

On réalise également une étape **S130** de calcul des variations corrigées Δ_{C}X(PSᵢ) des coordonnées des points de surveillance, réalisée à partir des variations brutes Δ_{B}X(PSᵢ) des coordonnées des points de surveillance, des variations brutes Δ_{B}X(PRⱼ) des coordonnées des points de référence et des variations réelles Δ_{R}X(PRⱼ) des coordonnées des points de référence.

Pour ce faire, la date à laquelle est prise la plus ancienne des images radar **12** est prise comme date de référence. Les variations de coordonnées sont donc relatives par rapport à cette date, mais aussi par rapport à l'un des points de référence.

Pour chacune des images radar **12** prises par le satellite **S,** on met en oeuvre un algorithme de distribution des erreurs de type moindres carrés en intégrant les coordonnées réelles des points de référence. Cet algorithme s'applique aux variations de coordonnées entre deux images radar. Dans cet exemple, l'étape de calcul **S130** permettant de fournir les variations corrigées de coordonnées à l'instant courant est appliquée entre la date de la deuxième image radar et l'instant courant, la deuxième image radar étant celle qui a été prise après l'image radar dont la date sert de référence.

On précise que le calcul consiste ici en la création d'une surface mathématique **30,** représentée en traits pointillés sur la figure **3****,** à partir de la variation brute de l'altitude des points de surveillance Δ_{B}z(PSᵢ) et des points de référence Δ_{B}z(PRⱼ). On ne s'intéresse donc pas ici aux deux autres coordonnées (x,y) dans la mesure où l'on cherche à surveiller les éventuels tassements de terrain.

On optimise ensuite cette surface **30** par l'algorithme précité en la déformant pour qu'elle ajuste au mieux les variations réelles Δ_{R}z(PRⱼ) des altitudes des points de références, à la suite de quoi on obtient une surface corrigée **40,** représentée en traits continus sur la figure **4****,** fournissant les variations corrigées Δ_{C}z(PSᵢ) des altitudes des points de surveillance.

Sans sortir du cadre de la présente invention, on pourrait calculer les variations réelles des deux autres coordonnées (x,y) des points de surveillance.

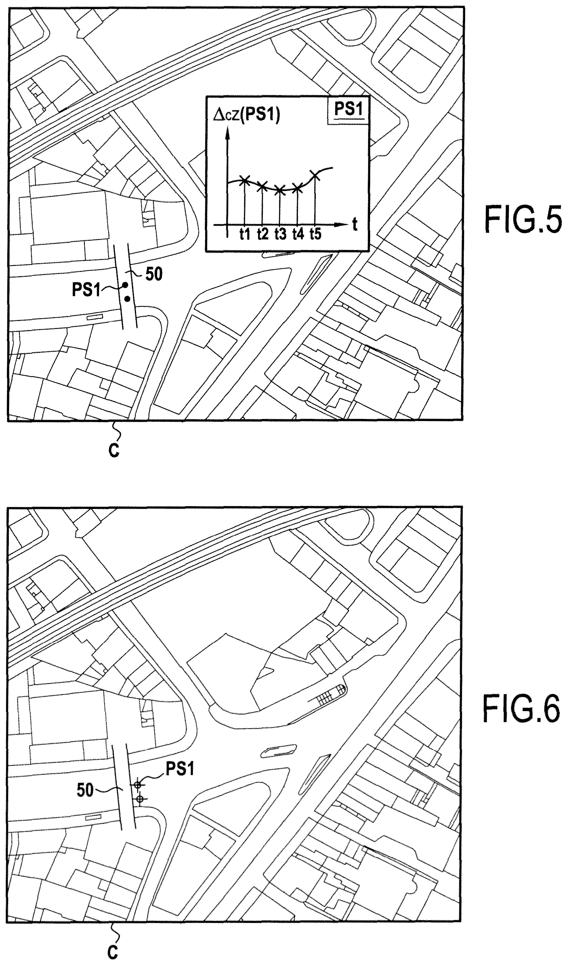

Conformément à l'invention, on réalise une étape de représentation **S140** de la variation temporelle d'au moins l'une des coordonnées corrigées de l'un des points de surveillance **PS₁.** Dans cet exemple, illustré sur la figure **5****,** la position du point de surveillance **PS₁** ainsi que la variation corrigée de son altitude sont représentées sur une carte **C** d'un système d'information géographique. On précise que ce point de surveillance **PS₁** est positionné grâce à ses coordonnées corrigées.

On a également illustré sur la figure **6****,** à titre d'information, la position de ce même point **PS₁** à l'aide de ses coordonnées brutes. On constate que le point de surveillance est positionné dans l'eau de manière erronée, à côté du pont **50.**

L'utilisateur, en sélectionnant le point **PS₁,** obtient un graphique lui indiquant la variation corrigée de l'altitude Δ_{C}z(PS₁) du point **PS₁** au cours du temps. Un code couleur peut également être utilisé afin de permettre à l'utilisateur de visualiser rapidement sur la carte **C** quels sont les points de surveillance qui présentent à l'instant courant la variation d'altitude la plus importante.

Le procédé de surveillance selon l'invention se présente préférentiellement sous la forme d'un programme d'ordinateur comportant des instructions dans un langage de programmation standard. Dans cet exemple, ce programme d'ordinateur est stocké sur un disque dur **60** d'un ordinateur **62,** schématisés sur la figure **7****.**

Ce programme d'ordinateur, ou une partie de celui-ci, pourra être chargée dans un serveur accessible à distance par un ordinateur distant.

De manière particulièrement avantageuse, ce procédé de surveillance permet de détecter l'affaissement éventuel d'un terrain dans lequel on réalise un ouvrage souterrain, tel un tunnel. En effet, les déformations provoquées par la construction d'un tunnel sont le plus souvent non-linéaires si bien que les algorithmes actuellement utilisés, réalisant une régression linéaire, ne permettent pas de les détecter.

## Revendications

1. Procédé de surveillance des mouvements d'un terrain, comprenant:
- une étape lors de laquelle on fournit les variations brutes (Δ_{B}X(PSᵢ)) des coordonnées d'une pluralité de points de surveillance (PSᵢ) situés sur le terrain, et les variations brutes (Δ_{B}X(PRⱼ)) des coordonnées d'au moins un point de référence (PRj) situé sur le terrain ;
et **caractérisé en ce qu'**il comprend:
- une étape de détermination (S110) des variations réelles (Δ_{R}X(PRⱼ)) des coordonnées dudit au moins un point de référence ;
- une étape de calcul (S130) des variations corrigées (Δ_{C}X(PSᵢ)) des coordonnées des points de surveillance, réalisée à partir des variations brutes des coordonnées des points de surveillance, des variations brutes des coordonnées dudit point de référence et des variations réelles des coordonnées dudit point de référence.

2. Procédé de surveillance des mouvements d'un terrain selon la revendication **1, caractérisé en ce qu'**il comporte en outre une étape lors de laquelle on détermine la variation temporelle corrigée (Δ_{C}z(PS₁)) d'au moins l'une des coordonnées d'au moins l'un des points de surveillance (PS₁).

3. Procédé de surveillance selon la revendication **2,** dans lequel la variation temporelle corrigée d'au moins l'une des coordonnées d'au moins l'un des points de surveillance est la variation corrigée de l'altitude (Δ_{C}z(PS₁)) de ce point de surveillance.

4. Procédé de surveillance selon la revendication 2 ou 3, **caractérisé en ce qu'**il comporte en outre une étape de représentation (S204) de ladite variation temporelle.

5. Procédé de surveillance selon la revendication 4, dans lequel, au cours de l'étape de représentation, la position de chacun des points de surveillance, ainsi que la variation corrigée (Δ_{C}z(PSᵢ)) de l'altitude de chacun des points de surveillance, sont représentées sur une carte géographique (C) ou satellite d'un système d'information géographique.

6. Procédé de surveillance selon l'une quelconque des revendications **1** à **5,** dans lequel l'étape de calcul (S130) des variations corrigées des coordonnées des points de surveillance (Δ_{C}X(PSᵢ)) est réalisée à l'aide des variations des coordonnées brutes et réelles des points de référence entre deux instants successifs.

7. Procédé de surveillance selon l'une quelconque des revendications **1** à **6,** dans lequel l'étape de calcul (S130) des variations corrigées des coordonnées des points de surveillance (Δ_{C}X(PSᵢ)) met en oeuvre un algorithme de distribution des erreurs de type moindres carrés.

8. Procédé de surveillance selon l'une quelconque des revendications **1** à **7, caractérisé en ce qu'**il comporte en outre :
- une étape lors de laquelle on fournit les coordonnées brutes X_{B}(PSᵢ) desdits points de surveillance (PSᵢ) et les coordonnées brutes X_{B}(PRⱼ) dudit au moins un point de référence (PRⱼ) ;
- une étape de détermination des coordonnées réelles X_{R}(PRⱼ) dudit point de référence (PRⱼ) ;
- une étape de calcul (S120) des coordonnées corrigées X_{C}(PSᵢ) desdits points de surveillance, réalisée à partir des coordonnées brutes des points de surveillance, des coordonnées brutes dudit point de référence et des coordonnées réelles dudit point de référence.

9. Procédé de surveillance selon la revendication **8,** dans lequel les variations brutes des coordonnées et/ou les coordonnées brutes sont fournies à partir d'une étude interférométrique (S10) basée sur un modèle numérique de terrain (14) et plusieurs images radar (12) prises par au moins un dispositif de prise d'images radar (S).

10. Procédé de surveillance selon la revendication **9,** dans lequel au moins l'un des points de surveillance (PSᵢ) du terrain comprend au moins un réflecteur d'ondes électromagnétiques (20) destiné à être dirigé vers ledit au moins un dispositif de prise d'images radar (S).

11. Procédé de surveillance selon la revendication **9** ou **10,** dans lequel au moins l'un des points de référence (PRₖ) du terrain comprend au moins un réflecteur d'ondes électromagnétiques (20) destiné à être dirigé vers ledit au moins un dispositif de prise d'images radar (S).

12. Procédé de surveillance selon l'une quelconque des revendications **1** à **11,** dans lequel les coordonnées réelles X_{R}(PRⱼ) des points de référence (PRⱼ) sont déterminées par mesures GPS ou par topographie.

13. Programme d'ordinateur comportant des instructions pour l'exécution des étapes du procédé de surveillance selon l'une quelconque des revendications **1** à **12** lorsque ledit programme est exécuté par un ordinateur (62).

14. Support d'enregistrement (60) lisible par un ordinateur (62) sur lequel est enregistré le programme d'ordinateur de la revendication **13.**

15. Utilisation du procédé selon l'une quelconque des revendications **1** à **12,** pour la surveillance de déformations non-linéaires du terrain, susceptibles de se produire notamment lors de la réalisation d'un ouvrage souterrain.

## Patentansprüche

1. Verfahren zur Überwachung der Bewegungen eines Geländes, umfassend:
- einen Schritt, bei dem die Rohänderungen (Δ_{B}X(PSᵢ)) der Koordinaten einer Vielzahl von auf dem Gelände befindlichen Überwachungspunkten (PSᵢ) sowie die Rohänderungen (Δ_{B}X(PRⱼ)) der Koordinaten von wenigstens einem auf dem Gelände befindlichen Referenzpunkt (PRj) bereitgestellt werden,
und **dadurch gekennzeichnet, dass** es umfasst:
- einen Schritt zur Bestimmung (S110) der tatsächlichen Änderungen (Δ_{R}X(PRj)) der Koordinaten des wenigstens einen Referenzpunktes,
- einen Schritt zur Berechnung (S130) der korrigierten Änderungen (Δ_{C}X(PSᵢ)) der Koordinaten der Überwachungspunkte, welcher anhand der Rohänderungen der Koordinaten der Überwachungspunkte, der Rohänderungen der Koordinaten des Referenzpunktes und der tatsächlichen Änderungen der Koordinaten des Referenzpunktes durchgeführt wird.

2. Verfahren zur Überwachung der Bewegungen eines Geländes nach Anspruch 1, **dadurch gekennzeichnet, dass** es ferner einen Schritt umfasst, bei dem die korrigierte zeitliche Änderung (Δ_{C}z(PS₁)) von wenigstens einer der Koordinaten von wenigstens einem der Überwachungspunkte (PS₁) bestimmt wird.

3. Überwachungsverfahren nach Anspruch 2, bei dem die korrigierte zeitliche Änderung von wenigstens einer der Koordinaten wenigstens eines der Überwachungspunkte die korrigierte Änderung der Höhe (Δ_{C}z(PS₁)) dieses Überwachungspunktes ist.

4. Überwachungsverfahren nach Anspruch 2 oder 3, **dadurch gekennzeichnet, dass** es ferner einen Schritt zur Darstellung (S204) der zeitlichen Änderung umfasst.

5. Überwachungsverfahren nach Anspruch 4, bei dem im Laufe des Darstellungsschrittes die Position eines jeden der Überwachungspunkte sowie die korrigierte Änderung (Δ_{C}z(PSᵢ)) der Höhe eines jeden der Überwachungspünkte auf einer geographischen Karte (C) oder Satelliten eines geographischen Informationssystems dargestellt werden.

6. Überwachungsverfahren nach einem der Ansprüche 1 bis 5, bei dem der Schritt zur Berechnung (S130) der korrigierten Änderungen der Koordinaten der Überwachungspunkte (Δ_{C}X(PSᵢ)) mit Hilfe der Roh- und tatsächlichen Änderungen der Koordinaten der Referenzpunkte zwischen zwei aufeinanderfolgenden Zeitpunkten durchgeführt wird.

7. Überwachungsverfahren nach einem der Ansprüche 1 bis 6, bei dem der Schritt zur Berechnung (S130) der korrigierten Änderungen der Koordinaten der Überwachungspunkte (Δ_{C}X(PSᵢ)) einen Fehlerverteilungsalgorithmus vom Typ kleinste Quadrate einsetzt.

8. Überwachungsverfahren nach einem der Ansprüche 1 bis 7, **dadurch gekennzeichnet, dass** es ferner umfasst:
- einen Schritt, bei dem die Rohkoordinaten X_{B}(PSᵢ) der Überwachungspunkte (PSᵢ) und die Rohkoordinaten X_{B}(PRⱼ) des wenigstens einen Referenzpunktes (PRⱼ) bereitgestellt werden,
- einen Schritt zur Bestimmung der tatsächlichen Koordinaten X_{R}(PRⱼ) des Referenzpunktes (PRⱼ),
- einen Schritt zur Berechnung (S120) der korrigierten Koordinaten X_{C}(PSᵢ) der Überwachungspunkte, welcher anhand der Rohkoordinaten der Überwachungspunkte, der Rohkoordinaten des Referenzpunktes und der tatsächlichen Koordinaten des Referenzpunktes durchgeführt wird.

9. Überwachungsverfahren nach Anspruch 8, bei dem die Rohänderungen der Koordinaten und/oder die Rohkoordinaten anhand einer interferometrischen Studie (S10), welche auf einem digitalen Geländemodell (14) und mehreren Radarbildern (12), die durch wenigstens eine Radarbildaufnahmevorrichtung (S) aufgenommen werden, basiert, bereitgestellt werden.

10. Überwachungsverfahren nach Anspruch 9, bei dem wenigstens einer der Überwachungspunkte (PSᵢ) des Geländes wenigstens einen Reflektor für elektromagnetische Wellen (20) umfasst, der dazu bestimmt ist, in Richtung der wenigstens einen Radarbildaufnahmevorrichtung (S) gerichtet zu werden.

11. Überwachungsverfahren nach Anspruch 9 oder 10, bei dem wenigstens einer der Referenzpunkte (PRₖ) des Geländes wenigstens einen Reflektor für elektromagnetische Wellen (20) umfasst, der dazu bestimmt ist, in Richtung der wenigstens einen Radarbildaufnahmevorrichtung (S) gerichtet zu werden.

12. Überwachungsverfahren nach einem der Ansprüche 1 bis 11, bei dem die tatsächlichen Koordinaten X_{R}(PRⱼ) der Referenzpunkte (PRⱼ) durch GPS-Messungen oder mittels Topographie bestimmt werden.

13. Computerprogramm, das Befehle für die Durchführung der Schritte des Überwachungsverfahrens nach einem der Ansprüche 1 bis 12, wenn das Programm durch einen Computer (62) ausgeführt wird, umfasst.

14. Durch einen Computer (62) lesbarer Aufzeichnungsträger (60), auf dem das Computerprogramm des Anspruchs 13 gespeichert ist.

15. Verwendung des Verfahrens nach einem der Ansprüche 1 bis 12, für die Überwachung von nicht linearen Verformungen des Geländes, welche insbesondere bei der Herstellung eines unterirdischen Bauwerks auftreten können.

## Claims

1. A method of surveying movements of a terrain, the method being **characterized in that** it comprises:
• a step of providing the raw variations (Δ_{B}X(PSᵢ)) of the coordinates of a plurality of survey points (PSᵢ) situated on the terrain, and the raw variations (Δ_{B}X(PRⱼ)) of the coordinates of at least one reference point (PRⱼ) situated on the terrain;
• a step (S110) of determining the real variations (Δ_{R}X(PRⱼ)) of the coordinates of said at least one reference point; and
• a step (S130) of calculating corrected variations (Δ_{C}X(PSᵢ)) of the coordinates of the survey points, performed on the basis of the raw variations of the coordinates of the survey points, of the raw variations of the coordinates of said reference point, and of the real variations of the coordinates of said reference point.

2. A method of surveying the movements of a terrain according to claim 1, **characterized in that** it further comprises a step of determining the corrected temporal variation (Δ_{C}z(PS1)) of at least one of the coordinates of at least one of the survey points (PS₁).

3. A survey method according to claim 2, wherein the corrected temporal variation of at least one of the coordinates of at least one of the survey points is the corrected variation of the altitude (Δ_{C}z(PS₁)) of said survey point.

4. A survey method according to claim 2 or claim 3, **characterized in that** it further includes a representation step (S204) of representing said temporal variation.

5. A survey method according to claim 4, wherein, during the representation step, the position of each of the survey points and the corrected variation (Δ_{C}z(PSᵢ)) of the altitude of each of the survey points are represented on a geographical or satellite map (C) of a geographical information system.

6. A survey method according to any one of claims 1 to 5, wherein the step (S130) of calculating corrected variations of the coordinates of the survey points (Δ_{C}X(PSᵢ)) is performed using the variations of the raw and real coordinates of the reference points between two successive instants.

7. A survey method according to any one of claims 1 to 6, wherein the step (S130) of calculating corrected variations of the coordinates of the survey points (Δ_{C}X(PSᵢ)) implements an error distribution algorithm of the least-squares type.

8. A survey method according to any one of claims 1 to 7, **characterized in that** it further comprises:
• a step of providing the raw coordinates X_{B}(PSᵢ) of said survey points (PSᵢ) and the raw coordinates X_{B}(PRⱼ) of said at least one reference point (PRⱼ);
• a step of determining the real coordinates X_{R}(PRⱼ) of said reference point (PRⱼ); and
• a step (S120) of calculating the corrected coordinates X_{C}(PSᵢ) of said survey points performed on the basis of the raw coordinates of the survey points, of the raw coordinates of said reference point, and of the real coordinates of said reference point.

9. A survey method according to claim 8, wherein the raw variations of the coordinates and/or the raw coordinates are provided from an interferometric study (S10) based on a digital terrain model (14) and a plurality of radar images (12) taken by at least one radar image-taking device (S).

10. A survey method according to claim 9, wherein at least one of the survey points (PSᵢ) of the terrain includes at least one electromagnetic wave reflector (20) for pointing towards said at least one radar image-taking device (S).

11. A survey method according to claim 9 or claim 10, wherein at least one of the reference points (PRₖ) of the terrain includes at least one electromagnetic wave reflector (20) for pointing towards said at least one radar image-taking device (S).

12. A survey method according to any one of claims 1 to 11, wherein the real coordinates X_{R}(PRⱼ) of the reference points (PRⱼ) are determined by GPS measurements or by topography.

13. A computer program including instructions for executing the step of the survey method according to any one of claims 1 to 12 when said program is executed by a computer (62).

14. A recording medium (60) readable by a computer (62) and having recorded thereon the computer program of claim 13.

15. The use of the method according to any one of claims 1 to 12, for surveying non-linear deformations of the terrain that are liable to occur in particular when building an underground work.
